(19) Europäisches Patentamt
European Patent Office
Office européen des brevets

(11) **EP 4 519 407 B1**

(12) # EUROPEAN PATENT SPECIFICATION

(45) Date of publication and mention
of the grant of the patent:
**15.04.2026 Bulletin 2026/16**

(21) Application number: **23721770.8**

(22) Date of filing: **05.05.2023**

(51) International Patent Classification (IPC):
$C12C\ 1/02$ (2006.01)    $C12C\ 1/18$ (2006.01)
$C12C\ 1/047$ (2006.01)    $C12C\ 1/16$ (2006.01)

(52) Cooperative Patent Classification (CPC):
**C12C 1/02; C12C 1/047; C12C 1/16; C12C 1/18;
C12C 12/00**

(86) International application number:
**PCT/EP2023/062060**

(87) International publication number:
**WO 2023/214080 (09.11.2023 Gazette 2023/45)**

(54) **MALTED DEHUSKED BARLEY**

GESCHÄLTES SPITZMALZ

CHIT MALT PELÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **05.05.2022 EP 22171872
05.05.2022 EP 22171877
12.12.2022 EP 22212918**

(43) Date of publication of application:
**12.03.2025 Bulletin 2025/11**

(73) Proprietor: **Heineken Supply Chain B.V.
2382 PH Zoeterwoude (NL)**

(72) Inventors:
• **VISSCHER, Hendrik Jan
2382 PH Zoeterwoude (NL)**
• **BEKKERS, Augustinus Cornelius A. P. A.
2382 PH Zoeterwoude (NL)**

• **VISSENAEKENS, Johan Franciscus Maria
2382 PH Zoeterwoude (NL)**
• **HOEKMAN, Christine Lidian
2382 PH Zoeterwoude (NL)**

(74) Representative: **Nederlandsch Octrooibureau
P.O. Box 29720
2502 LS The Hague (NL)**

(56) References cited:
GB-A- 1 403 391    US-A- 3 647 473
US-A- 4 004 034

• AGU R C ET AL: "Malting performance of normal Huskless and acid-Dehusked Barley samples", JOURNAL OF THE INSTITUTE OF BREWING, INSTITUTE OF BREWING. LONDON, GB, vol. 108, no. 2, 1 September 2002 (2002-09-01), pages 215 - 220, XP002970257, ISSN: 0046-9750

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD OF THE INVENTION**

The present invention relates to malted dehusked barley having the following combination of features:

- a moisture content of not more than 10 wt.%;
- a colour value of less than 22 EBC;
- an alpha-amylase activity of less than 58 Dextrinizing Units (DU) per gram of dry matter;
- an extract content of solid adjuncts ($C_E$) of at least 79% by weight of dry matter;
- a Klason lignin content ($C_L$) of less than 1.8% by weight of dry matter;
- an ash content ($C_A$) of less than 2.2 % by weight of dry matter;

wherein $25 \leq C_E/(C_L{}^*C_A) \leq 160$.

The invention also relates to the use of the aforementioned malted dehusked barley in the production of malt beverage.

**BACKGROUND OF THE INVENTION**

Malt is germinated cereal grain that has been produced in a process known as "malting".

Malting is a process of steeping, germinating, drying and deculming grain to convert it into malt. The main purpose of the malting process is to develop the endogenous enzymes α-amylase and β-amylase. These enzymes catalyse the conversion of starch into fermentable sugars when malt is used to produce a wort, i.e. the liquid extracted from the mashing process during the brewing of beer or whisky. Various grains are used for malting; the most common are barley, sorghum, wheat and rye. The malted grains obtained by malting barley or rye still contain the outer husk.

Steeping is the start of the malting process and comprises the addition of steep water to cover the grain to increase the moisture content of the grain to between 40 and 45%. In a modern pneumatic malt house, the grain is alternatively submerged (wet stand) and then drained (an air rest) for one, two or three cycles to achieve the target grain moisture content and the desired chit count. The chit is the first sign of the emerging rootlets. At the end of steeping the grain is cast-out to germination.

The aim of germination is to sprout the grains. During sprouting, malt enzymes are activated and these enzymes start modifying the structure of the barley endosperm by breaking down the cell walls and the protein matrix. Germination produces a large amount of heat. The grain bed is maintained at a constant temperature of between 10 and 16 °C by the constant supply of fresh humidified air and turners move through the grain bed to keep it loose to allow for sufficient air-flow. Germination typically takes 4-6 days and results in what is called "green malt".

Kilning reduces the grain moisture content of the green malt and stops the germination process. In the first stage, the free drying stage, the air temperature is kept cool to dry the grain without causing the enzymes to denature. As the grain dries it is possible to raise the air temperature (the second stage or the forced drying stage) to further dry the grain without inactivating the amylase enzymes. The target malt moisture after kilning is around 5% by weight. During the last few hours of kilning the air temperature is raised to above 80 °C (the curing stage). At the final drying stage colour and the malty aroma are formed by Maillard reactions.

Deculming is the term used for the removal of rootlets of the malt. Deculming is normally carried out shortly after transfer from the kiln.

"Chit malt" is a special type of malt that differs from ordinary malt in that it is obtained by a process that employs a shortened germination period of typically 1-2 days. In comparison to ordinary malt, the alpha-amylase activity of chit malt is considerably lower. Whereas ordinary malt typically has an alpha-amylase activity (EBC 4.13) of around 64 dextrinising unites (DU) per gram of dry matter, chit malt obtained after 1 day of germination typically has an alpha amylase activity of less than 58 DU per gram of dry matter.

Dugulin et al. (Overcoming technical barriers to brewing with green (non-kilned) malt: a feasibility study, Journal of the Institute of Brewing (2020), Volume 126, Issue 1 p. 24-34) examined the major quality issues associated with the use of non-kilned green malt in brewing.

US 4,004,034 and GB140391 describe a process for the manufacture of a wort which comprises subjecting barley to at least one treatment cycle comprising a steeping in water followed by exposure to air, the conditions of temperature and the duration of the stages of this cycle being chosen to cause chitting of the barley to form chit malt and to promote the development of a maximum enzymatic potential, rolling the chit malt, drying the rolled chit malt to stop the development of the biological processes occurring in it while retaining its enzymatic potential, grinding the dried and rolled chit malt and extracting it with a mixture of hot water and malt, the quantity of malt being 10 to 40% by weight on a solids basis of the dry weight of the mixture of ground chit and malt, and separating the wort so produced.

EP-A 1 630 225 describes a process for producing a malt-based beverage, the process comprising fractionating dry germinated barley by tissue, and using the fractionated fractions in the malt-based beverage. Tissue fractions described in the European patent application are an endosperm fraction, an endothelial layer fraction, a husk fraction, an acrospire fraction and a malt rootlets fraction.

US 3,896,001 describes a process for the production of malt comprising removing at least a part of the husk of the barley in such manner as to perforate the pericarp and testa to render the aleurone layer of the barley accessible to externally applied gibberellic acid, steeping the barley in an aqueous medium, resting the steeped barley in air, resteeping the barley in an aqueous medium, treating the barley with an aqueous mineral acid during or at the end of the resteeping step, applying at least 0.1 p.p.m. gibberellic acid, based on the barley weight to said barley at or before completion of the resteeping operation, allowing the resteeped barley to germinate for a period of 35-45 hours and then terminating germination before visible growth of micro-organisms has taken place.

US 3,708,002 describes a method of malting cereal grain in which prior to malting a proportion of the outer layers of untreated grain is removed by mechanical treatment, the amount of the outer layers removed being insufficient to substantially reduce the germination of the grain.

US 3,647,473 describes a process for preparing malted cereal grain comprising the steps of

- dehusking grain by a dry mechanical method so as to damage the grain sufficiently to prevent substantial rootlet growth without substantially damaging the aleurone layer and
- malting the so dehusked grain.

DE-C 555 162 describes a process for the preparation of a colouring agent for beer starting from naked barley, dehusked barley or dehusked malt, said process including a roasting step.

DD-A 122 690 describes a process in which naked barley was malted to produce a melanoidised and caramelized malt.

Agu RC et al. (Malting performance of normal huskless and acid-dehusked barley samples, Journal of the Institute of Brewing (2002) Volume 108, Issue 2 pages 215-220) describes the effects of various methods of dehusking on germination and malting performance.

Viking™ Pearled Black Malt is a commercially available malt that is produced by pearling barley before malting and roasting. This malt has no amylolytic activity and the amount of fermentable extract is low. It is used in dark beers like stouts and porters, mainly for its strong colouring ability.

To reduce the total carbon footprint of malt production it is desirable to increase the productivity of malt houses and to improve the efficiency of transport and storage.

## SUMMARY OF THE INVENTION

The inventors have developed a novel type of malt that delivers the aforementioned benefits and that can suitably be used to substitute at least a part of ordinary malt that is used in the production of e.g. beer.

The malt of the present invention can be produced by a malting process that (i) comprises the step of at least partial dehusking barley grains prior to malting and (ii) employs a shortened germination period. Due to the removal of husk prior to malting, steeping time can be shortened and/or the total amount of water that is absorbed by the grains can be reduced. Due to the faster mass transfer and/or the reduced water absorption, the amount of energy needed to remove water during kilning is also reduced considerably.

Thanks to the removal of husk, the bulk density of the malted dehusked barley is increased significantly. Thus, in comparison to ordinary malt, the space and energy required for transportation and storage of the malted dehusked barley are reduced.

The malted dehusked barley of the present invention is characterized by a low alpha-amylase activity, a low husk content and a high extract content. The low husk content of the malted dehusked barley is evident from the low lignin content and the low ash content of the dehusked malt. Since, contrary to husk, the endosperm of barley does not contain lignin, removal of husk from the barley inherently results in a reduction of lignin content. Likewise, since husk contains virtually no starch, removal of husk also inherently results in an increase of extract content.

Accordingly, a first aspect of the invention relates to a malted dehusked barley having the following combination of features:

- a moisture content of not more than 10 wt.%;
- a colour value of less than 22 EBC;
- an alpha-amylase activity of less than 58 Dextrinizing Units (DU) per gram of dry matter;
- an extract content of solid adjuncts ($C_E$) of at least 79% by weight of dry matter;
- a Klason lignin content ($C_L$) of less than 1.8% by weight of dry matter;

- an ash content ($C_A$) of less than 2.2 % by weight of dry matter;

wherein $25 \leq C_E/(C_L*C_A) \leq 160$.

The requirement $C_E/(C_L*C_A) \geq 25$ reflects that the malted dehusked barley of the present invention combines a high extract content with a low lignin content and a low ash content. The requirement $C_E/(C_L*C_A) \leq 160$ indicates that a non-negligible amount of husk is still present. Complete removal of the husk is economically unattractive as it is inevitably accompanied by loss of starch.

Another aspect of the invention relates to a process of producing a malted dehusked barley, said process comprising:

- providing barley grains;
- mechanically removing husk from the grains, thereby producing dehusked grains and husk material;
- steeping the dehusked grains with aqueous liquid to produce steeped dehusked grains having a moisture content to at least 20 wt.%;
- allowing the steeped dehusked grains to germinate during a period of 12-72 hours; and
- drying the germinated grains to reduce the water content to 10 wt.% or less.

The malted dehusked barley of the present invention offers the advantage that its production requires considerably less time and energy than the production of ordinary malt as the germination period is reduced from 5-6 days to 12 hours to 3 days. Furthermore, since a substantial part of the husk has been removed from the malt of the present invention, substantially less transportation volume and storage volume is needed.

Efficiency gains can also be made in the production of wort by using the malt of the present invention. By employing a malt blend containing the malted dehusked barley of the present invention, the application of excessive husk in the lautering step can be avoided and brewhouse yield and capacity be improved.

The inventors have recognized that in the production of wort, use of malt having low alpha-amylase activity is not problematic if such malt is combined with an adequate amount of ordinary malt, as present-day ordinary malt contains a surplus of amylase activity. In addition, or alternatively, the loss of alpha-amylase activity may be compensated for by employing added alpha-amylase during mashing. Thus, the malted dehusked barley of the present invention can suitably be used to replace at least a part of ordinary malt in the production of wort, without any adverse effect on the quality of the wort or the quality of the malt beverage obtained after fermentation of the wort.

Another aspect of the present invention relates to a malt blend comprising:

- 50-98 wt.% of an ordinary malt having an alpha-amylase activity of at least 58 Dextrinizing Units (DU) per gram of dry matter; and
- 2-50 wt.% of a malted dehusked barley according to the present invention.

Yet another aspect of the present invention relates to a method of producing a malt beverage, said method comprising:

- providing a mixture comprising malt and water, wherein at least 1 wt.% of the malt is the malted dehusked barley according to the present invention;
- mashing the mixture to convert starch into fermentable sugars and to produce a mash containing fermentable sugars; and
- subjecting the mash containing fermentable sugars to a solid-liquid separation to separate wort from insoluble matter.

## DETAILED DESCRIPTION OF THE INVENTION

The present invention provides a malted dehusked barley having the following combination of features:

- a moisture content of not more than 10 wt.%, as determined by EBC method 4.2 (Moisture Content of Malt);
- a colour value of less than 22 EBC, as determined by EBC method 4.7.2;
- an alpha-amylase activity of less than 58 Dextrinizing Units (DU) per gram of dry matter, as determined by EBC method 4.13 (Alpha-amylase Content of Malt);
- an extract content ($C_E$) of at least 79% by weight of dry matter, as determined by EBC method 6.4 (Extract Content of Solid Adjuncts; De Clerck Method);
- a Klason lignin content ($C_L$) of less than 1.8% by weight of dry matter, as determined by the standard method TAPPI T 222 om-02;
- an ash content ($C_A$) of less than 2.2 % by weight of dry matter;

wherein $25 \leq C_E/(C_L*C_A) \leq 160$.

The term "barley" as used herein refers to husk-carrying grains from the species *Hordeum vulgare.* Husk-free or "naked" barley *(Hordeum vulgare* L. var. *nudum)* is not encompassed by the term "barley" as used herein.

The term "malt" as used herein refers to a germinated barley grains that have been dried.

The term "husk" as used herein refers to the outer layer of barley grains that surrounds the pericarp layer.

The term "dehusking" as used herein refers to the application of abrasion and/or friction to remove husk from barley grains. Dehusking can be done, for instance, by using a dehusker/dehuller in which the grains are passed between rotating rollers, or by using pearling equipment which typically employs grinding stones to peel the husk from the grain.

The term "dehusked barley" as used herein refers to barley grains from which at least a part of the original husk was mechanically removed.

The term "malted dehusked barley" refers to dehusked barley that has been malted to produce a malt.

The "aleurone layer" as referred to herein refers to layer of living endosperm cells that encloses the outer surface of the starchy endosperms of grain

The term "steeping" as used herein refers to a procedure in which grains are covered with steep water to increase the moisture content of the grain ('wet stand'). The wet stands may be interrupted by so called 'dry stands', during which the water is drained out and fresh air may be supplied to remove excess carbon dioxide.

The term "germinating" as used herein refers to the procedure in which a bed of steeped grains is allowed to germinate under humid conditions.

The term "beer" as used herein refers to a yeast fermented malt beverage that has optionally been hopped. Beer is commonly produced by a process that comprises the following basic steps:

- mashing a mixture comprising malted grains, preferably malted barley, optionally supplementary grains and water to produce a mash;
- separating the mash in wort and spent grains;
- boiling the wort to produce a boiled wort;
- fermenting the boiled wort with live yeast to produce a fermented wort;
- subjecting the fermented wort to one or more further process steps (e.g. maturation and filtration) to produce beer; and
- packaging the beer in a sealed container, e.g. a bottle, can or keg.

Whenever reference is made herein to a standard method, such as an EBC method, the standard method meant is the last version of the standard method that was published before 5 May 2022.

Hop or hop extract is usually added during wort boiling to produce hopped beer. Depending on the beer style and brewing facility, the employed hopping method and timing may vary.

Ordinary malt comprises a core that is composed of starchy endosperm (distal end) and germinated embryo (proximal end). The outside of the starchy endosperm that is not adjacent the scutellum that separates the starch endosperm from the germinated embryo is covered (going from the inside to the outside) by an aleurone layer, testa, pericarp and husk.

The malted dehusked barley according to the present invention preferably has been dried to a moisture content of less than 9 wt.%, more preferably to a moisture content of 1 to 8 wt.%, even more preferably to a moisture content of 2 to 7 wt.%, most preferably to a moisture content of 3 to 6.5 wt.%, as determined by EBC 4.2.

The malted dehusked barley preferably has an alpha-amylase activity of 1-50, more preferably 2-35, even more preferably of 3-32, most preferably of 4-30 Dextrinizing Units (DU) per gram of dry matter as determined by EBC method 4.13.

The extract content of the malted dehusked barley of the present invention, as determined by EBC method 6.4, preferably is at least 80% by weight of dry matter, more preferably 81-86% by weight of dry matter and most preferably 82-85% by weight of dry matter.

According to a particularly preferred embodiment, the Klason lignin content of the malted dehusked barley is less than 1.5% by weight of dry matter, more preferably less 1.2% by weight of dry matter, even more preferably less than 1.1% by weight of dry matter and most preferably less than 1.0% by weight of dry matter.

The ash content of the malted dehusked barley preferably is less than 2.1% by weight of dry matter, more preferably less 2.0% by weight of dry matter, even more preferably less than 1.9% by weight of dry matter and most preferably less than 1.8% by weight of dry matter.

The ratio $C_E/(C_L*C_A)$ preferably is in the range of 28 to 150, more preferably in the range of 32 to 120 and most preferably in the range of 35 to 100.

The malted dehusked barley preferably has a beta-amylase activity of at least 2 units per gram of dry matter, more preferably at least 4 units per gram of dry matter, most preferably 6-40 units per gram of dry matter, as determined using Megazyme ß-amylase assay kit (Betamyl-3). Preferably, the beta-amylase activity of the malted dehusked barley does not exceed 30 units per gram of dry matter, more preferably it does not exceed 20 units per gram of dry matter, most preferably it does not exceed 15 units per gram of dry matter.

The ratio of beta-amylase activity of the malted dehusked barley, expressed in units per gram of dry matter, to the alpha-amylase activity of the malted grain, expressed as DU per gram of dry matter, preferably is in the range of 1:10 to 2:1, more preferably in the range of 1:5 to 1.5:1, and most preferably in the range of 1:4 to 1:1.

According to a preferred embodiment, the malted dehusked barley has a Kolbach Index of 5-35%, more preferably 8-30%, most preferably 10-25% as determined by EBC method 4.9.3 (Soluble Nitrogen of Malt: Dumas Combustion Method).

The final attenuation of the dehusked malted barley as determined by EBC 4.11.1 preferably exceeds 30%. More preferably, said final attenuation is in the range of 35% to 80%, even more preferably in the range of 40% to 70% and most preferably in the range of 52% to 65%.

The malted dehusked barley of the present invention preferably has a pH as determined by EBC 8.17 (pH of Wort) of at least 4.9, more preferably of at least 5.0. Typically, this pH does not exceed 6. Optimum pH is around 5.4. At pH lower than 4.9 both alpha-amylase and beta-amylase are inactivated.

The colour of malt can be determined spectrophotometrically according to EBC 4.7.2 (Colour of Malt: Visual Method. Preferably the colour of the malted dehusked barley is 1-10 EBC, more preferably 1.5-8 EBC, most preferably 2-4 EBC.

The colour contribution of malt to beer can also be determined using MEBAK R-205.07.110 [2016-03] (A). Preferably, the colour value of the malted dehusked barley as determined by this method is at least 2.0, more preferably 2.0 to 3.2 and most preferably 2.1 to 3.0.

According to a particularly preferred embodiment, the malted dehusked barley of the present invention closely resembles ordinary malt in terms of the flavour and colour contribution it provides to the final beverage. This is why the kilning step that is used to remove water from the green malt is preferably carried out under conditions similar to those used in ordinary malt production. The kilning step has an important impact on both flavour and colour of the malt as it typically employs high temperatures that promote Maillard reactions, oxidation reactions, caramelization.

The thiobarbituric acid value, or TBZ value, represents the content of carbonyl compounds including aldehydes (e.g. 5-hydroxymethylfurfural) and ketones, which are influenced by the heat load employed during malt kilning. Typically, the malted dehusked barley of the present invention has a TBZ value of at least 2, more preferably of at least 3, even more preferably of 5 to 12 and most preferably of 5.5 to 10, as determined by using the analysis method of the American Society of Brewing Chemists "Thiobarbituric Acid Index 2009". The thiobarbituric acid index method is applied to wort that has been prepared using the European Brewery Convention (EBC) method 4.5.1. (Extract of Malt: Congress Mash),

For a malty aroma, 4-hydroxy-2,5-dimethyl-3(2H)-furanone (HDMF) is an important contributor that is formed by the Maillard reaction during kilning. The malted dehusked barley of the present invention preferably comprises at least 0.3 mg/kg of HDMF, more preferably at least 0.5 mg/kg of HDMF, even more preferably 0.8 to 20 mg/kg of HDMF, yet more preferably 1 to 15 mg/kg of HDMF and most preferably 1.5 to 10 mg/kg HDMF. The HDMF content may suitably be determined using the method described by Mackie and Slaughter (Formation of 4-hydroxyfuranones and their precursors during production of worts and beers, J. Inst. Brew. (2002)108, 336-343).

Preferably, the malted dehusked barley has a S-methyl methionine content, expressed as dimethyl sulphide equivalent of less than 100 $\mu$g per g of dry matter, more preferably 0.01-10 $\mu$g per gram of dry matter, most preferably 0.05-1 $\mu$g per gram of dry matter. The S-methyl methionine content can suitably be determined by LC-MS/MS.

Preferably, the malted dehusked barley has a dimethyl sulphide content of less than 10 $\mu$g per gram of dry matter, more preferably less than 6 $\mu$g per gram of dry matter, most preferably less than 0.2 $\mu$g per gram of dry matter, as determined by GC-MS/MS.

During germination, the root embryo of the barley grains secretes a plant hormone called gibberellic acid, which initiates the synthesis of $\alpha$-amylase. In some malting operations, gibberellic acid is sprayed onto the barley to speed germination. Bromates are sometimes used to suppress rootlet growth and malting loss. The malted dehusked barley of the present invention preferably has been obtained by a malting process in which no gibberellic acid or bromate has been applied.

It is known to use hydrogen peroxide or ozone during steeping to promote barley acrospire growth. The malted dehusked barley of the present invention preferably has been obtained by a malting process in which no hydrogen peroxide or ozone has been applied.

It is known to add enzymes (e.g. amylolytic, proteolytic and/or alpha-glycanasic enzymes) during the production of chit malt in order to boost the enzymatic activity. The malted dehusked barley of the present invention preferably does not contain enzyme activity originating from microbial sources, more preferably it does not contain enzyme activity from other sources than barley.

According to a particularly preferred embodiment, the malted dehusked barley of the present invention has been ground. Grinding of the malt offers the advantage that in the brewing house the malt can be introduced directly into the mash. Furthermore, grinding of the malted dehusked barley can be used to increase the bulk density of the malt, thereby reducing the volume needed for transportation and storage. Unlike ordinary malt, the malted dehusked barley of the present invention can be ground without generating a lot of dust.

Preferably the bulk load density (freely settled) of the ground malt according to the invention is of at least 54-kg/hl, more preferably at least 58 kg/hl, most preferably 60-67 kg/hl. The bulk load density of the ground malt can suitably be determined by means of a chondrometer.

Preferably the particle size distribution of the ground malt, as determined using a set of sieves, is as follows:

- less than 20 wt.% > 1.0 mm

- not more than 15 wt.% ≤ 0.15 mm

More preferably the particle size distribution of the ground malt is as follows:

- less than 15 wt.% > 1.0 mm

- not more than 10 wt.% ≤ 0.15 mm

Most preferably the particle size distribution of the ground malt is as follows:

- less than 10 wt.% > 1.0 mm

- not more than 5 wt.% ≤ 0.15 mm

Milling of the malted dehusked barley also offers the advantages that the variation in particle size may be minimized, especially if fines are removed after milling. Accordingly, in a preferred embodiment, the ground malt contains less than 2 wt.%, more preferably less than 1 wt.% of fines having a particle size of not more than 0.15 mm.

According to a particularly preferred embodiment, the ground malted dehusked barley is packaged for transportation in a bag or a container. Typically, the bag or container holds at least 50 kg of the ground malted dehusked barley.

The malted dehusked barley of the present invention may suitably be produced by a process as described herein below.

Another aspect of the invention concerns a process of preparing a malted dehusked barley, said process comprising:

- providing barley grains;
- mechanically removing husk from the grains, thereby producing dehusked grains and husk material;
- steeping the dehusked grains with aqueous liquid to produce steeped dehusked grains having a moisture content to at least 20 wt.%;
- allowing the steeped dehusked grains to germinate during a period of 12-72 hours; and
- drying the germinated grains to reduce the water content to 10 wt.% or less.

According to a particularly preferred embodiment, the present process yields a malted dehusked barley as described herein before.

Preferably, the present process is an industrial process wherein at least 10 tons, more preferably at least 30 tons, even more preferably at least 50 tons, most preferably at least 70 tons of malted dehusked barley are prepared within 1 week.

According to a particularly preferred embodiment of the present process, the barley grains are not completely dehusked prior to malting. Complete dehusking may damage the embryo and aleurone layer of the barley grains, causing the barley grains to and lose the ability to germinate. Furthermore, complete dehusking inevitably is accompanied by starch losses.

The barley that is dehusked in the present process preferably has a moisture content of not more than 15 wt.%, more preferably of not more than 12 wt.% and most preferably of 2-10 wt.%, as determined by EBC method 4.2.

The barley that is dehusked in the present process preferably has an extract content of not more than 81% by weight of dry matter, more preferably of not more than 80% by weight of dry matter and most preferably of 72-79% by weight of dry matter, as determined by EBC method 6.4

The dehusking step preferably increases the extract content of the barley by at least 1%, more preferably by at least 1.5% and most preferably by 2 to 10% (extract content being determined by EBC method 6.4). Here the percentage increase is calculated as:

$$100\% \times ([EC_{after}] - [EC_{before}]) / [EC_{before}]$$

wherein

$[EC_{before}]$ represents the extract content after dehusking;

$[EC_{after}]$ represents the extract content before dehusking.

The lignin content of the barley that is provided in the present process preferably is in the range of 1.5-4.0% by weight of dry matter, more preferably in the range of 1.6-3.5% by weight of dry matter and most preferably in the range of 1.7-3.0% by weight of dry matter, as determined by the standard method TAPPI T 222 om-02.

In the dehusking step, preferably at least 25 wt.%, more preferably at least 35 wt.% and most preferably at least 40 wt.% of the lignin is removed (lignin content being determined by the standard method TAPPI T 222 om-02).

As it is practically impossible to remove all lignin without also removing starch and thereby reducing extract content of the barley grains, it is preferred not to remove all lignin present in the barley. Preferably, not more than 90 wt.%, even more preferably not more than 80 wt.% of the lignin is removed by dehusking in the present process.

The ash content of the barley that is dehusked in the present process preferably is more than 1.6% by weight of dry matter, more preferably more than 1.8% by weight of dry matter and most preferably in the range of 1.9-3.0% by weight of dry matter.

During the dehusking step, the barley preferably undergoes a weight reduction of 2-15%, more preferably of 3-12%, most preferably of 5-10%.

Dehusking of the barley is preferably achieved by passing the barley through a dehusking machine comprising one or more rotatable abrasive rollers. Preferably, the dehusking machine comprises two or more rotatable abrasive rollers that apply friction to grains that pass through the gap between these rollers by rotating at different speeds.

The present process preferably does not comprise addition of gibberellic acid, bromate, hydrogen peroxide or ozone.

In a further preferred embodiment, the present process does not comprise addition of amylolytic, proteolytic or alpha-glycanasic enzymes. Even more preferably, the process does not comprise the addition of enzymes.

Typically, the present process employs a steeping period of 3 to 30 hours, more preferably 4 to 26 hours, most preferably 5 to 25 hours.

The germination period employed in the present process preferably is in the range of 15 hours to 60 hours, more preferably of 18 hours to 48 hours, most preferably of 20 to 40 hours.

Typically, during germination at least 85%, more preferably at least 90% and most preferably at least 93% of the barley grains develop a visible chit.

During germination of the dehusked barley, the temperature is preferably maintained at15. to 25°C, more preferably at 16 to 22°C.

The moisture content of the dehusked barley grains is preferably maintained at 30-40 wt.%, more preferably at 33-35 wt.% during the germination.

The germinated grains are preferably dried to reduce the water content 9 wt.% or less, more preferably to a water content of 1 to 7.5 wt.%, even more preferably to a water content of 2 to 7 wt.% and most preferably to a water content of 3 to 6.5 wt.%, as determined by EBC 4.2.

The drying of the germinated grains is preferably carried out by contacting the germinated grains with hot air.

Preferably, during drying of the germinated grains, the temperature in the grains rises to at least 50°C, more preferably to temperature of at least 60°C, even more preferably to a temperature of 65-100°C and most preferably to a temperature of 70-98°C.

Also provided by the present invention is a malt blend comprising:

- 50-98 wt.% of an ordinary malt having an alpha-amylase activity of at least 58 Dextrinizing Units (DU) per gram of dry matter, as determined by EBC method 4.13;
- 2-50 wt.% of a malted dehusked barley according to the present invention.

This malt blend may suitably be used in the production of wort as the blend provides sufficient starch, amylolytic activity and husk (filter bed material) to produce a good quality wort without the use of any adjuncts.

The malt blend preferably contains 60-95 wt.% of ordinary malt and 5-40 wt.% of the malted dehusked barley. More preferably, the malt blend contains 65-92 wt.% of ordinary malt and 8-35 wt.% of the malted dehusked barley. Most preferably, the malt blend contains 70-90 wt.% of ordinary malt and 10-30 wt.% of the malted dehusked barley.

The combination of ordinary malt and the malted dehusked barley preferably constitutes 80-100 wt.%, more preferably 90-100 wt.% and most preferably 100 wt.% of the malt blend. has a moisture content of not more than 15 wt.%, more preferably of not more than 10wt.% and most preferably of not more than 8 wt.%, as determined by EBC method 4.2.

The ordinary malt that is contained in the malt blend preferably has a moisture content of not more than 15 wt.%, more preferably of not more than 12 wt.% and most preferably of 2-10 wt.%, as determined by EBC method 4.2.

The alpha-amylase activity of the ordinary malt preferably is at least 58 DU per gram of dry matter, more preferably in the range of 60-120 DU per gram of dry matter and most preferably in the range of 62-100 DU per gram of dry matter, as determined by EBC method 4.13

The ordinary malt that is present in the malt blend preferably has an extract content of less than 84% by weight of dry matter, more preferably of less than 81% by weight of dry matter and most preferably of 76-80% by weight of dry matter, as determined by EBC method 4.5.1.

The lignin content of the ordinary malt in the malt blend preferably is in the range of 0.8-4% by weight of dry matter, more preferably in the range of 1.0-3.5% by weight of dry matter and most preferably in the range of 1.2-3.0% by weight of dry matter, as determined by the standard method TAPPI T 222 om-02.

The ash content of the ordinary malt preferably is more than 1.6% by weight of dry matter, more preferably more than 1.8% by weight of dry matter and most preferably in the range of 1.9-3.0% by weight of dry matter.

The ordinary malt and the malted dehusked barley may be present in the malt blend in the form of ground or non-ground malt. Preferably, both malt components are present in the same form, i.e. ground or non-ground. Most preferably, the malt blend contains the ordinary malt and the malted dehusked barley in non-ground form.

The malt blend of the present invention preferably has an alpha-amylase activity of at least 44 Dextrinizing Units (DU), more preferably of 46 to 100 DU and most preferably of 48 to 80 DU per gram of dry matter, as determined by EBC method 4.13.

Yet another aspect of the invention concerns a method or producing a malt beverage, said method comprising:

- providing a mixture comprising malt and water, wherein at least 1 wt.% of the malt is the malted dehusked barley according to the present invention,
- mashing the mixture to convert starch into fermentable sugars and to produce a mash containing fermentable sugars; and
- subjecting the mash containing fermentable sugars to a solid-liquid separation to separate wort from insoluble matter.

Preferably at least 50 wt.%, more preferably at least 75 wt.%, most preferably 100 wt.% of the malt in the mixture comprising malt and water is barley malt.

Preferably at least 2 wt.%, more preferably at least 5 wt.%, even more preferably at least 8 wt.% and most preferably at least 10 wt.% of the malt in the mixture comprising malt and water is the malted dehusked barley according to the present invention.

Typically, not more than 50 wt%, more preferably not more than 40 wt.% and most preferably not more than 35 wt.% of the malt in the mixture comprising malt and water is the malted dehusked barley of the present invention.

According to a particularly preferred embodiment, the malt in the mixture comprising malt and water contains at least 90 wt.%, more preferably at least 95 wt.% and most preferably 100 wt.% of a combination of the malted dehusked barley of the present invention and ordinary malt, as defined herein before

The malt that is employed in the present method preferably has an alpha-amylase activity of at least 44 Dextrinizing Units (DU), more preferably of 46 to 100 DU and most preferably of 48 to 80 DU per gram of dry matter, as determined by EBC method 4.13.

The combination of ordinary malt and the malted dehusked barley preferably constitutes 80-100 wt.%, more preferably 90-100 wt.% and most preferably 100 wt.% of the malt in the mixture comprising malt and water.

The present method preferably does not comprise addition of an enzyme preparation prior to or during the mashing. Here the term "enzyme preparation" refers to a preparation containing enzyme activity other than malt (including the malted dehusked barley of the present invention).

According to a preferred embodiment the mashing is an infusion mashing. Infusion mashing is more energy- and time-efficient in comparison to other mashing methods such as decoction mashing.

The mixture comprising malt and water preferably does not comprise adjuncts.

In a particularly preferred embodiment, the solid-liquid separation of the mash comprises filtering of the mash through a filter bed that comprises at least 80 wt.%, more preferably at least 90 wt.% and most preferably 100 wt.% of insoluble material originating from the malt. Examples of devices that may be used for such filtration include a lautertun, a mash filter and a mash/lauter vessel.

According to a particularly preferred embodiment, the present method yields a wort that is 100% malt based.

According to a particularly preferred embodiment, the wort is further processed to produce a malt beverage in the form of beer or whiskey, said further processing comprising the step of subjecting the wort to a yeast fermentation. Preferably the fermentation is a bottom fermentation.

The invention is further illustrated by the following non-limiting examples.

**EXAMPLES**

**Example 1**

Barley (2 rowed spring barley, origin France) was dehusked in batches of 100g in a Satake Test Mill (TM05C(2)-T). The total amount of material removed during dehusking was 6.7 wt.%.

Both the barley and the dehusked barley were analysed to determine moisture content, lignin content and ash content. The results are shown in Table 1.

**Table 1**

|  | Barley | Dehusked barley |
|---|---|---|
| Moisture content barley(in wt.%) | 12.8 | 12.5 |
| Lignin content (% by weight of d.m.) | 2.07 | 1.14 |
| Ash content (%by weight of d.m.) | 2.21 | 1.76 |

**Example 2**

Malt was produced from the barley and the malted barley of Example 1, using a germination period of 24 hours. A micro malting setup was used and the malting conditions employed were as follows:

500 grams of barley and dehusked barley were steeped for 8 hours. After a germination period of 24 hours, both samples were kilned following a 22.5 hour program.

The malts so obtained were analysed. The results of the analyses are summarized in Table 2.

**Table 2**

|  | Malted barley | Malted dehusked barley |
|---|---|---|
| Moisture content malt (in wt.%) | 6.0 | 5.5 |
| Alpha-amylase activity (DU/g of d.m.) | 15 | 16 |
| Beta-amylase activity (U/g of d.m) | 14.1 | 5.0 |
| Extract content - EBC 6.4 (% by weight of d.m.) | 78.1 | 84.1 |
| Lignin content (% by weight of d.m.) | 1.97 | 0.81 |
| Ash content (%by weight of d.m.) | 2.18 | 1.55 |
| Colour (EBC units) | 2.5 | 2.4 |
| $C_E/(C_L*C_A)$ | 18.2 | 67.0 |

**Example 3**

Two pure malt beers are produced using an identical brewing process, the only difference being that beer A is produced using 100% of ordinary malt, whereas beer B is produced using a 80:20 (w/w) blend of ordinary malt and the malted dehusked barley of Example 2.

The beers so obtained are subjected to a difference-from-control test using a panel of 12 trained beer testers. The results show that the beers are indistinguishable.

**Example 4**

Three different chit malts (Malts A, B and 1) were prepared from RGT Planet barley that had been mechanically dehusked as described in Example 1 to remove approximately 6 wt.% of material.

The dehusked barley was steeped, germinated and dried using the procedures summarized in Table 3.

**Table 3**

|  | Malt A | Malt B | Malt 1 |
|---|---|---|---|
| Steeping | • Immerse 1.5 hours in steeping water of 25°C<br>• Pour off water and leave uncovered for 6 hours under aeration<br>• Immerse 1 hour in steeping water of 25°C containing 0.5 wt.% $H_2O_2$ | • Same as Malt A, except that last step uses steeping water that does not contain added $H_2O_2$ | • Immerse for 8 hours in steeping water of 25°C |
| Germination | • Pour off water and leave uncovered for 15.5 hours at 25°C under aeration | Same as Malt A | • Pour off water and leave uncovered for 24 hours at 25°C under aeration |
| Drying | • 50°C;<br>ramp time: 0.5 hr.<br>hold time:6 hrs<br>• 60°C;<br>ramp time: 2 hrs.<br>hold time: 9 hrs<br>• 30°C<br>ramp time: 2 hrs.<br>hold time: 2 hrs | Same as Malt A | • 55°C;<br>ramp time: 0.5 hr<br>hold time:5.5 hrs<br>• 60°C;<br>ramp time: 0.5 hr<br>hold time: 8.5 hrs<br>• 76°C<br>ramp time: 2 hrs.<br>hold time: 3 hrs<br>• 30°C<br>ramp time: 2 hrs.<br>hold time: 2 hrs |

The chit malts so obtained were analysed. The results of the analyses are shown in Table 4.

**Table 4**

|  | Malt A | Malt B | Malt 1 |
|---|---|---|---|
| Beta-amylase activity [1] | 196 | 225 | 486 |
| Wort colour [2] | 1.9 | 1.7 | 2.0 |
| pH (EBC 8.17) | 4.8 | 4.8 | 5.1 |
| Final attenuation (EBC 4.11.1 | 26.1% | 20.5% | 53.0% |

[1] MEBAK R-200.22.111 [2016-03] (A)
[2] MEBAK R-205.07.110 [2016-03] (A)

**Claims**

1. Malted dehusked barley having the following combination of features:

   • a moisture content of less than 10 wt.%, as determined by EBC method 4.2 (Moisture Content of Malt);
   • a colour value of less than 22 EBC, as determined by EBC method 4.7.2;
   • an alpha-amylase activity of less than 58 Dextrinizing Units (DU) per gram of dry matter, as determined by EBC method 4.13 (Alpha-amylase Content of Malt);
   • an extract content ($C_E$) of at least 79% by weight of dry matter, as determined by EBC method 6.4 (Extract Content of Solid Adjuncts; De Clerck Method);
   • a Klason lignin content ($C_L$) of less than 1.8% by weight of dry matter, as determined by the standard method TAPPI T 222 om-02;
   • an ash content ($C_A$) of less than 2.2 % by weight of dry matter;

   wherein $25 \leq C_E/(C_L*C_A) \leq 160$.

2. Malted dehusked barley according to claim 1, wherein the malt has a beta-amylase activity of at least 2 units per gram of dry matter, as determined using Megazyme β-amylase assay kit (Betamyl-3).

3. Malted dehusked barley according to claim 1 or 2, wherein the malt has an extract content of at least 82% by weight of dry matter, as determined by EBC method 6.4.

4. Malted dehusked barley according to any one of the preceding claims, wherein the malt has a Klason lignin content of less than 1.5% by weight of dry matter, as determined by the standard method TAPPI T 222 om-02.

5. Malt according to any one of the preceding claims, wherein the malt has an ash content of less than 2.0% by weight of dry matter.

6. Malted dehusked barley according to any one of the preceding claims, wherein the malted dehusked barley has an alpha-amylase activity of less than 50 Dextrinizing Units (DU) per gram of dry matter, as determined by EBC method 4.13 (Alpha-amylase Content of Malt).

7. Malted dehusked barley according to any one of the preceding claims, having a colour value of less than 10 EBC, as determined by EBC method 4.7.2 (Colour of Malt: Visual Method).

8. Malted dehusked barley according to any one of the preceding claims, wherein the aleurone layer of the barley grains is undamaged; and wherein $28 \leq C_E/(C_L*C_A) \leq 100$.

9. Malted dehusked barley according to any one of the preceding claims, wherein the malted dehusked barley has a final attenuation, as determined by EBC 4.11.1, that exceeds 30% .

10. A process of producing malted dehusked barley according to any one of the preceding claims, said process comprising:

   • providing barley grains;
   • mechanically removing husk from the grains, thereby producing dehusked grains and husk material;
   • steeping the dehusked grains with aqueous liquid to produce steeped dehusked grains having a moisture content of at least 20 wt.%;
   • allowing the steeped dehusked grains to germinate during a period of 12-72 hours; and
   • drying the germinated grains to reduce the water content to 10 wt.% or less.

11. Process according to claim 10, wherein the mechanical removal of husk reduces the weight of the barley grains by 2-18%.

12. Process according to claim 10 or 11, wherein at least 25 wt.% of the lignin present the barley grain is removed by the mechanical removal of husk.

13. Process according to any one of claims 10-12, wherein the dehusked barley grains are not treated with gibberellic acid or bromate.

14. A malt blend comprising:

   • 50-98 wt.% of an ordinary malt having an alpha-amylase activity of at least 58 Dextrinizing Units (DU) per gram of dry matter, as determined by EBC method 4.13;
   • 2-50 wt.% of a malted dehusked barley according to any one of claims 1-9.

15. A method of producing a malt beverage, said method comprising:

   • providing a mixture comprising malt and water, wherein at least 1 wt.% of the malt is a dehusked malted barley according to any one of claims 1-9;
   • mashing the mixture to convert starch into fermentable sugars and to produce a mash containing fermentable sugars; and
   • subjecting the mash containing fermentable sugars to a solid-liquid separation to separate wort from insoluble matter.

**Patentansprüche**

1. Gemälzte geschälte Gerste mit der folgenden Kombination von Merkmalen:

   - einem Feuchtigkeitsgehalt von weniger als 10 Gewichtsprozent, bestimmt nach EBC-Methode 4.2 (Feuchtigkeitsgehalt von Malz);
   - einen Farbwert von weniger als 22 EBC, bestimmt nach EBC-Methode 4.7.2;
   - eine Alpha-Amylase-Aktivität von weniger als 58 Dextrinisierungseinheiten (DU) pro Gramm Trockenmasse, bestimmt nach EBC-Methode 4.13 (Alpha-Amylase-Gehalt von Malz);
   - einen Extraktgehalt ($C_E$) von mindestens 79 Gewichtsprozent der Trockenmasse, bestimmt nach EBC-Methode 6.4 (Extraktgehalt fester Zusatzstoffe; De Clerck-Methode);
   - einen Klason-Ligningehalt ($C_L$) von weniger als 1,8 Gewichtsprozent der Trockenmasse, bestimmt nach der Standardmethode TAPPI T 222 om-02;
   - einen Aschegehalt ($C_A$) von weniger als 2,2 Gewichtsprozent der Trockenmasse;

   wobei $25 \leq C_E /(C_L{*}C_A) \leq 160$.

2. Gemälzte geschälte Gerste nach Anspruch 1, wobei das Malz eine Beta-Amylase-Aktivität von mindestens 2 Einheiten pro Gramm Trockenmasse aufweist, bestimmt unter Verwendung des Megazyme β-Amylase-Assay-Kits (Betamyl-3).

3. Gemälzte geschälte Gerste nach Anspruch 1 oder 2, wobei das Malz einen Extraktgehalt von mindestens 82 Gewichtsprozent Trockenmasse aufweist, bestimmt nach der EBC-Methode 6.4.

4. Gemälzte geschälte Gerste nach einem der vorstehenden Ansprüche, wobei das Malz einen Klason-Ligningehalt von weniger als 1,5 Gewichtsprozent Trockenmasse aufweist, bestimmt nach der Standardmethode TAPPI T 222 om-02.

5. Gemälzte geschälte Gerste nach einem der vorstehenden Ansprüche, wobei das Malz einen Aschegehalt von weniger als 2,0 Gewichtsprozent der Trockenmasse aufweist.

6. Gemälzte geschälte Gerste nach einem der vorstehenden Ansprüche, wobei die gemälzte geschälte Gerste eine Alpha-Amylase-Aktivität von weniger als 50 Dextrinisierungseinheiten (DU) pro Gramm Trockenmasse aufweist, bestimmt nach der EBC-Methode 4.13 (Alpha-Amylase-Gehalt von Malz).

7. Gemälzte geschälte Gerste nach einem der vorstehenden Ansprüche, mit einem Farbwert von weniger als 10 EBC, bestimmt nach der EBC-Methode 4.7.2 (Farbe von Malz: visuelle Methode).

8. Gemälzte geschälte Gerste nach einem der vorstehenden Ansprüche, wobei die Aleuronschicht der Gerstenkörner unbeschädigt ist und wobei $28 \leq C_E /(C_L{*}C_A) \leq 100$ ist.

9. Gemälzte geschälte Gerste nach einem der vorstehenden Ansprüche, wobei die gemälzte geschälte Gerste eine Endvergärung, bestimmt nach EBC 4.11.1, von mehr als 30 % aufweist.

10. Verfahren zur Herstellung von gemälzter geschälter Gerste nach einem der vorstehenden Ansprüche, wobei das Verfahren umfasst:

    - Bereitstellen von Gerstenkörnern;
    - mechanisches Entfernen der Schale von den Körnern, wodurch geschälte Körner und Schalenmaterial erzeugt werden;
    - Einweichen der geschälten Körner in einer wässrigen Flüssigkeit, um eingeweichte geschälte Körner mit einem Feuchtigkeitsgehalt von mindestens 20 Gewichtsprozent zu erhalten;
    - Keimenlassen der eingeweichten geschälten Körner über einen Zeitraum von 12-72 Stunden; -und
    - Trocknen der gekeimten Körner, um den Wassergehalt auf 10 Gewichtsprozent oder weniger zu reduzieren.

11. Verfahren nach Anspruch 10, wobei das mechanische Entfernen der Schale das Gewicht der Gerstenkörner um 2-18 % reduziert.

12. Verfahren nach Anspruch 10 oder 11, wobei mindestens 25 Gewichtsprozent des im Gerstenkorn vorhandenen Lignins durch das mechanische Entfernen der Schale entfernt werden.

13. Verfahren nach einem der Ansprüche 10 bis 12, wobei die geschälten Gerstenkörner nicht mit Gibberellinsäure oder Bromat behandelt werden.

14. Malzmischung, umfassend:

- 50-98 Gewichtsprozent eines gewöhnlichen Malzes mit einer Alpha-Amylase-Aktivität von mindestens 58 Dextrinisierungseinheiten (DU) pro Gramm Trockenmasse, bestimmt nach der EBC-Methode 4.13;
- 2-50 Gewichtsprozent einer gemälzten geschälten Gersten nach einem der Ansprüche 1-9.

15. Verfahren zur Herstellung eines Malzgetränks, wobei das Verfahren umfasst:

- Bereitstellen einer Mischung aus Malz und Wasser, wobei mindestens 1 Gewichtsprozent des Malzes eine geschälte gemälzte Gerste nach einem der Ansprüche 1-9 ist;
- Maischen der Mischung, um Stärke in fermentierbare Zucker umzuwandeln und eine Maische herzustellen, die fermentierbare Zucker enthält; und
- Unterziehen der Maische, die fermentierbare Zucker enthält, einer Fest-Flüssig-Trennung, um Würze von unlöslichen Stoffen zu trennen.

**Revendications**

1. Orge maltée décortiquée présentant la combinaison suivante de caractéristiques :

• une teneur en humidité inférieure à 10 % en poids, telle que déterminée par la méthode EBC 4.2 (teneur en humidité du malt) ;

• une valeur de couleur inférieure à 22 EBC, telle que déterminée par la méthode EBC 4.7.2 ;
• une activité alpha-amylase inférieure à 58 unités de dextrinisation (DU) par gramme de matière sèche, telle que déterminée par la méthode EBC 4.13 (teneur en alpha-amylase du malt) ;
• une teneur en extrait ($C_E$) d'au moins 79 % en poids de matière sèche, telle que déterminée par la méthode EBC 6.4 (teneur en extrait de grains crus solides ; méthode De Clerck) ;
• une teneur en lignine Klason ($C_L$) inférieure à 1,8 % en poids de matière sèche, telle que déterminée par la méthode standard TAPPI T 222 om-02 ;
• une teneur en cendres ($C_A$) inférieure à 2,2 % en poids de matière sèche ;

où $25 \leq C_E /( C_L * C_A) \leq 160$.

2. Orge maltée décortiquée selon la revendication 1, où le malt a une activité bêta-amylase d'au moins 2 unités par gramme de matière sèche, telle que déterminée à l'aide du kit de dosage Megazyme de la β-amylase (Betamyl-3).

3. Orge maltée décortiquée selon la revendication 1 ou 2, où le malt a une teneur en extrait d'au moins 82 % en poids de matière sèche, telle que déterminée par la méthode EBC 6.4.

4. Orge maltée décortiquée selon l'une quelconque des revendications précédentes, où le malt a une teneur en lignine Klason inférieure à 1,5 % en poids de matière sèche, telle que déterminée par la méthode standard TAPPI T 222 om-02.

5. Malt selon l'une quelconque des revendications précédentes, où le malt a une teneur en cendres inférieure à 2,0 % en poids de matière sèche.

6. Orge maltée décortiquée selon l'une quelconque des revendications précédentes, où l'orge maltée décortiquée a une activité alpha-amylase inférieure à 50 unités de dextrinisation (DU) par gramme de matière sèche, telle que déterminée par la méthode EBC 4.13 (teneur en alpha-amylase du malt).

7. Orge maltée décortiquée selon l'une quelconque des revendications précédentes, ayant une valeur de couleur inférieure à 10 EBC, telle que déterminée par la méthode EBC 4.7.2 (Couleur du malt : méthode visuelle).

**8.** Orge maltée décortiquée selon l'une quelconque des revendications précédentes, où la couche d'aleurone des grains d'orge n'est pas endommagée ; et où $28 \leq C_E /( C_L {}^* C_A) \leq 100$.

**9.** Orge maltée décortiquée selon l'une quelconque des revendications précédentes, où l'orge maltée décortiquée a une atténuation finale, telle que déterminée par la méthode EBC 4.11.1, qui dépasse 30 %.

**10.** Procédé de production d'orge maltée décortiquée selon l'une quelconque des revendications précédentes, ledit procédé comprenant :

• fournir des grains d'orge ;
• éliminer mécaniquement l'enveloppe des grains, produisant ainsi des grains décortiqués et des matériaux d'enveloppes ;
• tremper les grains décortiqués dans un liquide aqueux pour produire des grains décortiqués trempés ayant une teneur en humidité d'au moins 20 % en poids ;

• laisser les grains décortiqués trempés germer pendant une période de 12 à 72 heures ; et
• sécher les grains germés afin de réduire la teneur en eau à 10 % en poids ou moins.

**11.** Procédé selon la revendication 10, où l'élimination mécanique de l'enveloppe réduit le poids des grains d'orge de 2 à 18 %.

**12.** Procédé selon la revendication 10 ou 11, où au moins 25 % en poids de la lignine présente dans le grain d'orge est éliminée par l'élimination mécanique de l'enveloppe.

**13.** Procédé selon l'une quelconque des revendications 10 à 12, où les grains d'orge décortiqués ne sont pas traités avec de l'acide gibbérellique ou du bromate.

**14.** Mélange de malt comprenant :

• 50 à 98 % en poids d'un malt ordinaire ayant une activité alpha-amylase d'au moins 58 unités de dextrinisation (DU) par gramme de matière sèche, telle que déterminée par la méthode ESC 4.13 ;
• 2 à 50 % en poids d'une orge maltée décortiquée selon l'une quelconque des revendications 1 à 9.

**15.** Méthode de production d'une boisson de malt, ladite méthode comprenant :

• fournir un mélange comprenant du malt et de l'eau, où au moins 1 % en poids du malt est une orge maltée décortiquée selon l'une quelconque des revendications 1 à 9 ;
• brasser le mélange pour convertir l'amidon en sucres fermentables et pour produire une maische contenant des sucres fermentables ; et
• soumettre la maische contenant des sucres fermentables à une séparation solide-liquide afin de séparer le moût des matières insolubles.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4004034 A
- GB 140391 A
- EP 1630225 A
- US 3896001 A
- US 3708002 A
- US 3647473 A
- DE 555162 C
- DD 122690 A


**Non-patent literature cited in the description**

- **DUGULIN et al.** Overcoming technical barriers to brewing with green (non-kilned) malt: a feasibility study. *Journal of the Institute of Brewing*, 2020, vol. 126 (1), 24-34
- **AGU RC et al.** Malting performanceof normal huskless and acid-dehusked barley samples. *Journal of the Institute of Brewing*, 2002, vol. 108 (2), 215-220
- **MACKIE** ; **SLAUGHTER**. Formation of 4-hydroxy-furanones and their precursors during production of worts and beers. *J. Inst. Brew.*, 2002, vol. 108, 336-343